# EUROPÄISCHE PATENTSCHRIFT

(11) **EP 0 589 178 B1**
(45) Veröffentlichungstag und Bekanntmachung des Hinweises auf die Patenterteilung: **06.03.1996**
(21) Anmeldenummer: 93112041.4
(22) Anmeldetag: 28.07.1993
(51) Int. Cl.: F02B 23/06

(54) **Brennraumform für luftverdichtende, selbstzündende Brennkraftmaschinen**
Shape of the combustion chamber for air compressing, self-ignited engines
Forme de la chambre de combustion pour moteurs à compression d'air et à allumage par compression

(30) Priorität: 27.08.1992 DE 4228518
(43) Veröffentlichungstag der Anmeldung: 30.03.1994
(73) Patentinhaber: MAN Nutzfahrzeuge Aktiengesellschaft, D-80976 München (DE)
(72) Erfinder: Neitz, Alfred, D-90530 Wendelstein (DE)

(56) Entgegenhaltungen:
- WO-A-92/13190
- FR-A- 607 923
- FR-A- 851 052
- FR-A- 2 590 935
- GB-A- 444 806
- GB-A- 1 146 589
- US-A- 1 662 553
- US-A- 1 865 841
- US-A- 2 001 358
- TECHNISCHE MITTEILUNGEN KRUPP FORSCHUNGSBERICHTE Bd. 24, Nr. 02 , 1. Februar 1966 , ESSEN (DE) Seiten 8 - 16 LÖHNER 'Entwicklungsfragen des Motorbaues'

## Beschreibung

Die Erfindung bezieht sich auf eine Brennraumform.

Der Brennraum direkteinspritzender Brennkraftmaschinen wird aus dem Zylinder, dem Zylinderkopf und dem Kolbenboden gebildet. Zur Verbesserung der Randbedingungen für die Anhebung des indizierten Wirkungsgrades ist es bei Verwendung eines Ein- und eines Auslaßventils bekannt, den Zylinderkopfboden halbkugelförmig und den Kolbenboden kegelförmig zu gestalten. Zweck dieser Brennraumform ist die Erzeugung eines Luftwirbels, um eine bessere Vermischung von Luft und eingespritztem Brennstoff zu erzielen. Durch die Verwirbelung wird allerdings Brennstoff mit den Brennraumwänden in Berührung kommen und durch Abkühlung nicht ausbrennen. Zudem ist eine derartige, vollkommen zur Zylinderachse symmetrische Brennraumform nur für zwei Ventile geeignet. Moderne Brennkraftmaschinen bedienen sich jedoch zur Verbesserung des Ladungswechsels der Anordnung von vier Ventilen (GB-A- 1146589).

Der Erfindung liegt daher die Aufgabe zugrunde, bei Verwendung von vier Ventilen den Brennraum so zu gestalten, daß eine vorzeitige Wandberührung der Brennstoffstrahlen vermieden wird.

Erfindungsgemäß wird diese Aufgabe durch die Merkmale des Patentanspruches 1 gelöst.

Durch die Anwendung von vier Ventilen je Zylinderkopf ist es notwendig, den Zylinderkopfboden aus zwei verschiedenen, stetig ineinander übergehenden Kugelabschnitten zusammenzusetzen, da sich sonst die schräg angeordneten Ventile benachbarter Zylinder gegenseitig stören würden und die Brennstoffstrahlen vorzeitige Wandberührung erleiden wiirden.

Eine vorteilhafte Weiterbildung der erfindungsgemäßen Brennraumform kann Unteranspruch 2 entnommen werden.

Bei Brennkraftmaschinen mit hohem Verdichtungsverhältnis wird der Raum zwischen Kolbenboden und Zylinderkopf so klein, daß der sich auffächernde Brennstoffstrahl an seinem Umfang Wandberührung bekommen würden, was durch radial verlaufende Mulden im Kolbenboden vermieden wird.

Ausführungsbeispiele der erfindungsgemäßen Brennraumform können den Zeichnungen entnommen werden. Es zeigt:
Fig. 1 einen Längs- bzw. Querschnitt I-I aus Fig. 2 durch einen Brennraum bei Verwendung von zwei Einlaß- und zwei Auslaßventilen
Fig. 2 Draufsicht auf eine mehrzylindrige. Brennkraftmaschine mit vier Ventilen je Zylinder

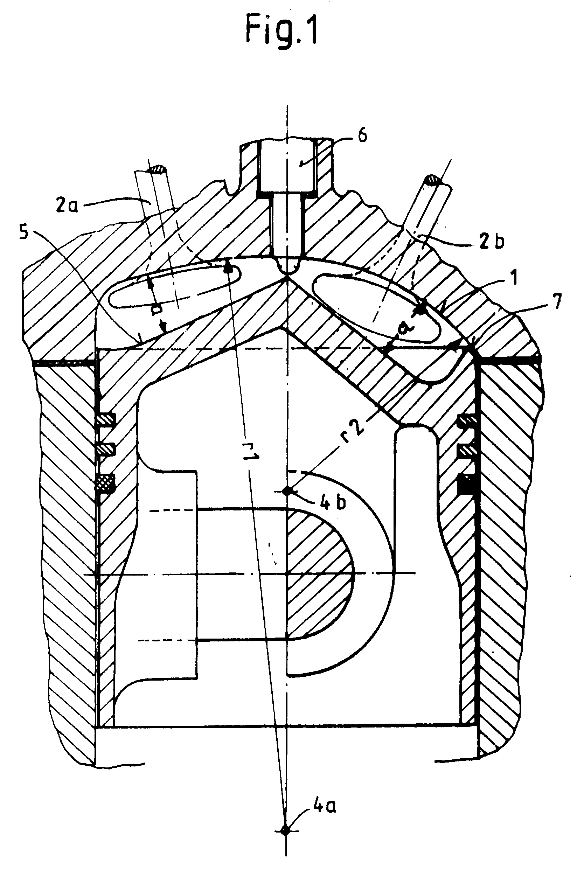

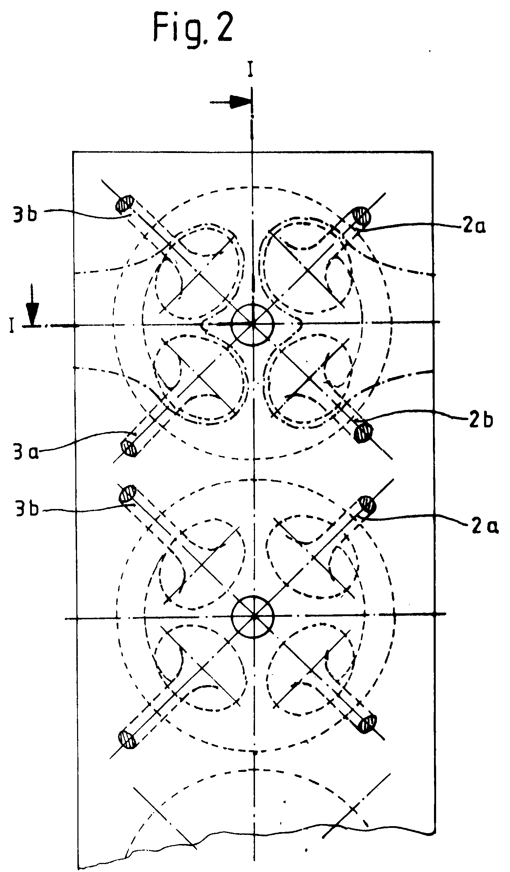

Figur 1 zeigt in einem Längs- bzw. Querschnitt I-I aus Fig. 2 den Verlauf des Zylinderkopfbodens 1 auf der Brennraumseite bei Anwendung von vier Ventilen, also bei zwei Einlaß- und zwei Auslaßventilen 2a, 2b bzw. 3a, 3b von denen in Fig. 1 nur das Einlaßventil 2a und das Auslaßventil 2b zu sehen ist. Der Zylinderkopfboden 1 weist in der Ebene die von einer Motorlängsachse und einer Zylinderachse aufgespannt wird einen Krümmungsradius r₁ mit einem Krümmungsmittelpunkt 4a auf, während in der Ebene die von der Zylinderachse und rechtwinklig zur Motorlängsachse aufgespannt wird der Krümmungsradius r2 beträgt. Der Krümmungsmittelpunkt liegt für r2 in Punkt 4b. Die unterschiedlichen Krümmungsradien werden erforderlich, da sich sonst Ventile benachbarter Zylinder im Wege stehen, wie dies in Figur 2 veranschaulicht wird. Der Kolbenboden 5 folgt bezüglich Abstand "a" dem in Figur 1 dargestellten Verlauf des Zylinderkopfbodens 1. Für einen konstanten Abstand von der Zylinderachse ist der Abstand "a" zwischen Kolbenboden 5 und Zylinderkopfboden 1 stets gleichbleibend

Die Neigung des Kolbenbodens 5 wird derart gewählt, daß die von einer mehrstrahligen Einspritzdüse 6 ausgehenden Brennstoffstrahlen weder die Fläche des Kolbenbodens 5, noch die Flächen der Einlaß- bzw. Auslaßventile 2a, 2b bzw. 3a, 3b oder den Zylinderkopfboden 1 berühren. Die Bohrungen der Einspritzdüse 6 seien am Umfang gleichmäßig verteilt angebracht, so daß jeder der Brennstoffstrahlen gleiche Randbedingungen vorfindet.

Bei einem hohen Verdichtungsverhältnis wird der Abstand zwischen dem Zylinderkopfboden 1 und Kolbenboden 5 so gering, daß die Brennstoffstrahlen in ihrem Randbereich diese Teile berühren können, was zu unverbrannten Brennstoff-Bestandteilen im Abgas führen kann. Es wird deshalb vorgeschlagen, daß in den Kolbenboden 5 Mulden eingearbeitet werden. Diese Mulden sind bei hohem Verdichtungsverhältnis ebenso wie der Verlauf des Kolbenbodens 5 im Falle eines niedrigen Verdichtungsverhältnis dem Verlauf der auffächernden Brennstoffstrahlen angepaßt.

Zum Schutz der Zylinderwand und zur Verringerung des Schadraumes ist der Kolben in seinem Randbereich als Schürze 7 hochgezogen. Der Abstand von Schürze 7 zum Zylinderkopfboden 1 ist so klein als möglich zu halten, um den schädlichen Raum klein zu halten.

Figur 2 zeigt schematisch eine Draufsicht in Richtung auf die Zylinderköpfe bei Anwendung von 4 Ventilen ( Figur 1). Jeder Zylinderkopf weist die zwei Einlaß- und Auslaßventile 2a, 2b bzw. 3a, 3b auf, deren Achsen aus der Zeichenebene herausragend zu denken sind. Damit sich die Ventile 2a, 2b und 3a, 3b benachbarter Zylinder nicht tangieren weist der Zylinderkopfboden 1 zwei stetig ineinander übergehende Kugelabschnitte mit aus Figur 1 ersichtlichen unterschiedlichen Krümmungen r₁ und r₂ auf. Die jeweils lotrecht auf dem örtlich sich ergebenden Flächen des Zylinderkopfbodens 1 ( Figur 1) stehenden Ventile weisen damit eine derart geneigte räumliche Lage auf, so daß sie sich nicht tangieren.

Die Ventilmitten der Einlaß und Auslaßventile 2a, 2b bzw. 3a, 3b müssen dabei nicht unbedingt durch die Zylindermitte gehen.

## Patentansprüche

1. Brennraumform einer luftverdichtenden, selbstzündenden Brennkraftmaschine, bei der der Brennraum durch einen Zylinder, einen Zylinderkopfboden und einen Kolbenboden begrenzt wird und ein Zylinderkopf eine mehrstrahlige Einspritzdüse aufweist und für den Gaswechsel je zwei Ein- und Auslaßventile vorgesehen sind, wobei der Zylinderkopfboden (1) Öffnungen für zwei Einlaß- bzw. Auslaßventile (2a, 2b bzw. 3a, 3b) aufweist, der Zylinderkopfboden (1) aus zwei Kugelabschnitten unterschiedlicher Krümmungsradien r₁, r₂ gebildet wird, deren Krümmungsmittelpunkte (4a, 4b ) auf der Zylinderachse liegen, wobei sich dabei ein erster Kugelabschnitt mit Krümmungsradius r1 in einer von der Motorlängsachse und der Zylinderachse aufgespannten Ebene befindet und sich ein zweiter Kugelabschnitt mit Krümmungsradius r₂ in einer von der Zylinderachse rechtwinklig zur Motorlängsachse aufgespannten Ebene befindet, wobei in den dazwischen liegenden Ebenen in der Zylinderachse die zwei Kugelabschrtitte stetig ineinander übergehen, wobei der Kolbenboden (5) überwiegend als Fläche ausgeführt ist, wobei die Neigung der Fläche derart gestaltet ist, daß von einer Spitze der Fläche ausgehend der Abstand "a" zwischen Fläche und Zylinderkopfboden (1) in dem Maße zunimmt, in dem eine Kontur der von der Einspritzdüse (6) ausgehenden Brennstoffstrahlen auffächert, und wobei die Öffnungen der Ein- und Auslaßventile 2a, 2b, bzw. 3a, 3b ) in Richtung der Zylinderachse gesehen jeweils quer zur Motorlängsachse angeordnet sind.

2. Brennraumform nach Anspruch 1, dadurch gekennzeichnet, daß der Kolbenboden (5) in Richtung auf die Zylinderachse gesehen radial gerichtete Mulden aufweist, und daß die Mulden im Querschnitt gesehen derart ausgebildet sind, daß sie der Form der von der Einspritzdüse (6) ausgehenden Brennstoffstrahlen angepaßt sind.

## Claims

1. A combustion-chamber shape of an air-compression, self-igniting internal-combustion engine, in which the combustion chamber is bounded by a cylinder, a cylinder-head base and a piston base, and a cylinder head comprises a multiple-jet injection nozzle, and two intake and two exhaust valves are provided respectively for the gas change, wherein the cylinder-head base (1) has openings for two intake and two exhaust valves (2a, 2b and 3a, 3b) respectively, the cylinder-head base (1) is formed by two spherical portions with different radii of curvature **r**₁, **r**_{2,} of which the centres of curvature (4a_{,} 4b) are situated on the cylinder axis, wherein a first spherical portion with the radius of curvature **r**₁ is situated in a plane spanned by the longitudinal axis of the engine and the cylinder axis, and a second spherical portion with the radius of curvature **r**₂ is situated in a plane spanned by the cylinder axis at right angles to the longitudinal axis of the engine, wherein the two spherical portions pass continuously into each other in the planes situated therebetween in the cylinder axis, wherein the piston base (5) is constructed primarily as a surface, wherein the inclination of the surface is such that starting from a peak on the surface the distance "**a**" between the surface and the cylinder-head base (1) increases to the extent at which a profile of the fuel jets starting from the injection nozzle (6) fans out, and wherein the openings of the intake and exhaust valves (2a, 2b and 3a, 3b respectively) are each arranged transversely to the longitudinal axis of the engine as viewed in the direction of the cylinder axis.

2. A combustion-chamber shape according to Claim 1, **characterized in that** the piston base (5) is provided with hollows orientated radially as viewed in the direction of the cylinder axis, and the hollows are formed in such a way as viewed in cross-section that they are adapted to the shape of the fuel jets, starting from the injection nozzle (6).

## Revendications

1. Forme de chambre de combustion pour un moteur à combustion interne, à compression d'air, à auto-allumage, la chambre de combustion étant délimitée par un cylindre, un fond de culasse et un fond de piston, et la culasse comporte un injecteur à plusieurs jets et, pour l'échange des gaz, chaque fois deux soupapes d'admission et d'échappement, le fond de culasse (1) ayant des orifices pour deux soupapes d'admission et d'échappement (2a, 2b) ou (3a, 3b), le fond de culasse (1) étant formé de deux segments de sphère de rayon de courbure (r₁, r₂), différents, les centres de courbure (4a, 4b) se situant sur l'axe du cylindre, un premier segment de sphère de rayon de courbure (r₁) se trouvant dans un plan passant par l'axe longitudinal du moteur et l'axe du cylindre et un second segment de sphère de rayon de courbure (r₂) se trouvant dans un plan perpendiculaire à l'axe longitudinal du moteur, et dans les plans intermédiaires, les deux segments de sphère se rejoignent en continu, dans l'axe du cylindre, le fond de culasse (5) étant principalement réalisé comme surface dont l'inclinaison est telle que, partant d'une pointe de la surface, la distance (a) entre la surface et le fond de culasse (1) augmente comme le contour de l'étalement en éventail des jets de carburant de l'injecteur (6) et les ouvertures des soupapes d'admission et d'échappement (2a, 2b) ou (3a, 3b) sont dirigées transversalement à l'axe longitudinal du moteur vers l'axe du cylindre.

2. Forme de chambre de combustion selon la revendication 1, caractérisée en ce que le fond (5) du piston comporte des gorges dans la direction radiale par rapport à l'axe du cylindre et ces gorges ont une forme adaptée aux jets de carburant de l'injecteur (6).
